# EUROPEAN PATENT APPLICATION

(11) **EP 4 835 611 A1**
(43) Date of publication of application: **04.11.2026**
(21) Application number: 26167729.8
(22) Date of filing: 25.03.2026
(51) Int. Cl.: G06F 1/24, G06F 1/04, G06F 30/33, G06F 30/39

(54) **DIGITAL CIRCUIT WITH IMPROVED RESET ARCHITECTURE FOR MULTIPLE RESET DOMAINS, AND CORRESPONDING METHOD OF OPERATION**

(30) Priority: 30.04.2025 IT 202500009657
(71) Applicant: STMicroelectronics International N.V., 1228 Plan-les-Ouates, Geneva (CH)
(72) Inventor: KABIR, Zain, D-81539 München (DE); CVEJANOVIC, Dorde, D-81829 München (DE)
(74) Representative: Buzzi, Notaro & Antonielli d'Oulx S.p.A.

(57) **Abstract**

In a digital circuit (40), a communication bus interface (302) receives and decodes bus signals (*paddr, pwrite, psel, penable, pwdata, pready*) and produces a reset initiator signal (*sw_rst1_wr*) based thereon. The reset initiator signal is asserted to indicate that a reset is demanded. A first flip-flop (316) is clocked by a first clock signal (*clk1*) and reset by a first reset signal (*rst1_n*). A second flip-flop (318) is clocked by a second clock signal (*clk1_gated*) and reset by a second reset signal (*rst2_n*)*.* The second flip-flop receives a data signal from the first flip-flop. A reset register (306) is reset by the second reset signal, receives the reset initiator signal, and produces a reset source signal (*sw_rst1*) based thereon. A first logic gate (312) receives the second reset signal and the complement of the reset source signal, and asserts the first reset signal in response to the second reset signal being asserted and/or the reset source signal being asserted. A gating circuit (422, 424) receives the reset initiator signal, the reset source signal and the first clock signal, and produces the second clock signal by: passing the first clock signal to the output of the gating circuit in response to the reset initiator signal and the reset source signal being de-asserted, and disabling the output of the gating circuit in response to any of the reset initiator signal and the reset source signal being asserted.

## Description

### Technical field

The present description relates to digital circuits (e.g., included in a System-on-Chip, SoC) that operate with multiple reset domains.

### Technological background

In complex digital circuits (e.g., SoCs) that include multiple reset domains, the reset signals can be propagated across different domains, thus possibly generating Reset Domain Crossing (RDC) timing issues.

During the design phase of integrated circuits (IC), analysis of RDC timing has a certain relevance mainly for two reasons.

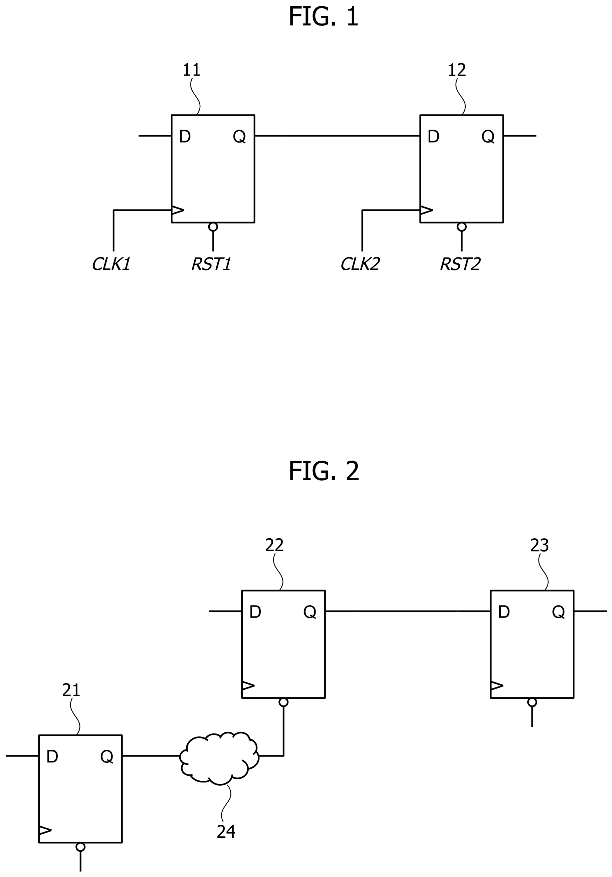

The first reason is that, if a flip-flop (FF) is reset asynchronously (that is, by a reset signal that is not synchronous with the clock signal), the setup time (i.e., the period before the clock edge during which the input signal is expected to be stable) and/or the hold time (i.e., the period after the clock edge during which the input signal is expected to be stable) of the target flip-flop may be violated. This is exemplified in the circuit diagram of Figure 1, which shows a first flip-flop 11 and a second flip-flop 12. The data output terminal Q of flip-flop 11 is connected to the data input terminal D of flip-flop 12 (the latter being thus the "target" flip-flop). Flip-flop 11 is clocked by a first clock signal *CLK1* and is reset by a first reset signal *RST1* (e.g., active-low), while flip-flop 12 is clocked by a second clock signal *CLK2* and is reset by a second reset signal *RST2* (e.g., active-low). The clear terminal CLR of both flip-flops (not visible in Figure 1) may be assumed to be asynchronous. The clock signals *CLK1* and *CLK2* may be equal or different. If flip-flop 11 is reset asynchronously, the setup/hold time of flip-flop 12 may be violated (insofar as the data output terminal Q of flip-flop 11 may toggle close to an edge of the clock signal *CLK2),* resulting in possible metastability of the data signal at the data output terminal Q of flip-flop 12.

A second reason for which RDC timing analysis has a certain relevance is that the Static Timing Analysis (STA) carried out during validation of the digital designs conventionally does not check the preset/reset arcs (that is, the signal propagation paths that pass through one or more reset terminals of flip-flops), because such an analysis may generate violations that are difficult to understand, especially in complex digital designs. Since the preset/reset arcs are generally not checked during STA, even synchronously-asserted resets may produce setup/hold timing violations, if not handled properly. This is exemplified in the circuit diagram of Figure 2, which shows a first flip-flop 21, a second flip-flop 22, and a third flip-flop 23, which may be clocked by the same clock signal (not visible in Figure 2). The data output terminal Q of flip-flop 21 is coupled (e.g., via a combinational circuit 24) to the reset terminal of flip-flop 22, so that flip-flop 21 acts as a synchronous reset source for flip-flop 22. The data output terminal Q of flip-flop 22 is connected to the data input terminal D of flip-flop 23. During STA, the signal path from the data input terminal D of flip-flop 22 to the data output terminal Q of flip-flop 23 may be checked, while the signal path from the data output terminal Q of flip-flop 21 to the data output terminal Q of flip-flop 23 may not be checked (insofar as the latter signal path passes through the reset terminal of flip-flop 22).

In this field, document US 10936774 B1 is exemplary of the prior art, insofar as it discloses a method to identify RDC metastability failures by means of static analysis. According to this document, RDC metastability is a reset-related metastability caused by an antecedent reset assertion in one reset domain affecting flip-flops in a different reset domain. According to this document, RDC metastability can be avoided by preventing the effect of an antecedent reset assertion transition from reaching a downstream flip-flop, which can be obtained by means of a blocking logic gate (called "reset clamp") in all paths from the antecedent reset-assertion flip-flop to the data input terminal of the downstream flip-flop.

Document US 2021/0333852 A1 is also exemplary of the prior art in this field, insofar as it discloses a RDC checker circuit configured to prevent metastability when data leaves an MCU for a bus system, in the case that the source domain undergoes a reset, but the destination domain is not to be reset. The RDC checker circuit is positioned to intercept outgoing data from the MCU heading towards the bus system.

Other documents possibly of interest in this field include US 2013/0013950 A1, US 2003/0115497 A1, US 2024/0192745 A1, and US 2024/0012446 A1.

Despite the developments in the field, there is a need in the art to provide improved (e.g., robust) reset architectures for digital circuits (e.g., SoCs) that include multiple reset domains, in particular in order to address potential RDC timing issues with so-called software-triggered (SW-triggered) resets.

### Object and summary

An object of one or more embodiments is to contribute in providing digital circuits with such improved reset architectures, and corresponding methods of operation.

According to one or more embodiments, such an object can be achieved by a circuit having the features set forth in the claims that follow.

One or more embodiments may relate to a corresponding method of operation.

The claims are an integral part of the technical teaching provided herein in respect of the embodiments.

According to a first aspect of the present description, a digital circuit includes a communication bus interface configured to receive and decode one or more bus signals and to produce a reset initiator signal based thereon. The reset initiator signal is asserted to indicate that a reset is demanded. The circuit includes at least one first flip-flop configured to be clocked by a first clock signal and be reset by a first reset signal. The circuit includes at least one second flip-flop configured to be clocked by a second clock signal and be reset by a second reset signal. The at least one second flip-flop is configured to receive a data signal from the at least one first flip-flop. The circuit includes a reset register configured to be reset by the second reset signal, and configured to receive the reset initiator signal and to produce a reset source signal based thereon. The circuit includes a first logic gate configured to receive the second reset signal and the complement of the reset source signal, and configured to assert the first reset signal in response to the second reset signal being asserted and/or the reset source signal being asserted. The circuit includes a gating circuit configured to receive the reset initiator signal, the reset source signal and the first clock signal, and configured to produce the second clock signal at an output of the gating circuit by: passing the first clock signal to the output of the gating circuit in response to the reset initiator signal and the reset source signal being de-asserted; and disabling the output of the gating circuit in response to any of the reset initiator signal and the reset source signal being asserted.

One or more embodiments may thus provide a digital circuit with an improved (e.g., robust) reset architecture that facilitates addressing the possible timing issues for software-triggered (e.g., firmware-triggered, FW-triggered) resets that may generally not be captured in STA analysis. Additionally, one or more embodiments may provide a solution that is independent from process, voltage and temperature (PVT) variations and/or relies on an implementation with a low (e.g., minimal) number of logic gates, where all the signal propagation paths (e.g., arcs) can be checked by an STA tool.

According to a preferred feature of the first aspect of the present description, the reset register is configured to be clocked by the first clock signal.

According to a preferred feature of the first aspect of the present description, the gating circuit includes: a NOR logic gate configured to receive the reset initiator signal and the reset source signal and to produce an intermediate output signal based thereon; and a clock gating cell configured to receive the intermediate output signal and the first clock signal, and to produce the second clock signal based thereon.

According to a preferred feature of the first aspect of the present description, the digital circuit includes a reset synchronizer circuit configured to be clocked by the first clock signal and be reset by an asynchronous reset signal to produce the second reset signal.

According to a preferred feature of the first aspect of the present description, the reset register includes a register flip-flop configured to receive the first clock signal at a respective clock terminal, receive the second reset signal at a respective reset terminal, receive the reset initiator signal at a respective data input terminal, and produce the reset source signal at a respective data output terminal.

According to a preferred feature of the first aspect of the present description, the communication bus interface includes a slave interface configured to receive and decode signals encoded according to an Advanced Microcontroller Bus Architecture (AMBA) protocol, preferably an Advanced Peripheral Bus (APB) protocol or an Advanced High-performance Bus (AHB) protocol.

According to a preferred feature of the first aspect of the present description, the communication bus interface is configured to assert the reset initiator signal during an access phase of an APB transaction.

According to a preferred feature of the first aspect of the present description, the communication bus interface is configured to assert the reset initiator signal during a data phase of an AHB transaction.

According to a second aspect of the present description, a method of operating a digital circuit according to one or more embodiments includes:
- receiving and decoding the one or more bus signals at the communication bus interface, and producing the reset initiator signal based thereon, asserting the reset initiator signal to indicate that a reset is demanded;
- receiving the reset initiator signal at the reset register, and producing the reset source signal based thereon;
- receiving the second reset signal and the complement of the reset source signal at the first logic gate, and asserting the first reset signal in response to the second reset signal being asserted and/or the reset source signal being asserted;

- receiving the reset initiator signal, the reset source signal and the first clock signal at the gating circuit, and producing the second clock signal at an output of the gating circuit by:
   - passing the first clock signal to the output of the gating circuit in response to the reset initiator signal and the reset source signal being de-asserted; and
   - disabling the output of the gating circuit in response to any of the reset initiator signal and the reset source signal being asserted.

### Brief description of the figures

One or more embodiments will now be described, by way of example only, with reference to the annexed figures, wherein:
- Figure 1 is a circuit diagram exemplary of interconnected flip-flops having different reset signals;
- Figure 2 is a circuit diagram exemplary of interconnected flip-flops having different reset signals and a reset arc;
- Figure 3 is a circuit diagram exemplary of a digital circuit including multiple reset domains;
- Figure 4 is a circuit diagram exemplary of a digital circuit including multiple reset domains and an improved reset architecture, according to one or more embodiments of the present description;
- Figure 5 is a time diagram including waveforms of signals of the circuit of Figure 4, in the case of a software-triggered reset via an AMBA APB interface (Advanced Microcontroller Bus Architecture - Advanced Peripheral Bus - see the specification IHI 0024D (ID041221) by ARM); and
- Figure 6 is a time diagram including waveforms of signals of the circuit of Figure 4, in the case of a software-triggered reset via an AMBA AHB interface (Advanced Microcontroller Bus Architecture - Advanced High-performance Bus - see the specification IHI 0033C (ID090921) by ARM).

### Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment" that may be present in one or more points of the present description do not necessarily refer to one and the same embodiment. Moreover, particular configurations, structures, or characteristics may be combined in any adequate way in one or more embodiments.

The headings/references used herein are provided merely for convenience and hence do not define the extent of protection or the scope of the embodiments.

Throughout the figures annexed herein, unless the context indicates otherwise, like parts or elements are indicated with like references/numerals and a corresponding description will not be repeated for the sake of brevity.

As anticipated, an object of one or more embodiments of the present description is that of providing a digital circuit having an improved reset architecture that facilitates addressing the possible timing issues for software-triggered resets that may generally not be captured in STA analysis.

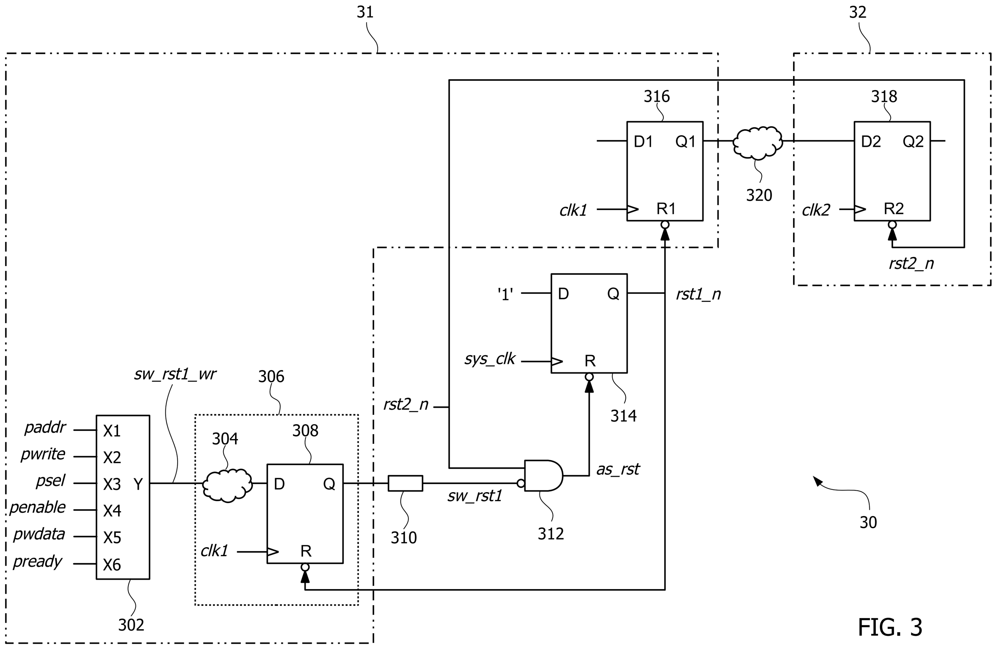

By way of introduction to the detailed description of exemplary embodiments, reference may be made initially to Figure 3, which is a circuit diagram exemplary of a digital circuit 30 including multiple reset domains, where a reset can be triggered by software (specifically, by firmware). For instance, the digital circuit 30 may be a microcontroller unit (MCU). It is common in a MCU to have some modules that can be reset stand-alone (e.g., individually) via firmware writing on a dedicated bit register (called SW reset). So, multiple reset domains can coexist in a digital design. When there are, for instance, two reset domains that are connected to each other and differ for the presence of a software reset source, it can happen that, when the software reset signal is asserted in the source reset domain, the hold and/or setup time of one or more flip-flops of the destination reset domain can be violated (even if assertion of the software reset signal is synchronous with the clock signal, as described with reference to Figure 2).

The digital circuit 30 (e.g., MCU) of Figure 3 includes an interface 302 configured to receive signals (e.g., from a communication bus). For instance, the interface 302 may be a slave interface configured for connection to a bus that operates according to the Advanced Microcontroller Bus Architecture (AMBA) Advanced Peripheral Bus (APB) protocol (in brief, AMBA APB protocol or just APB protocol). The interface 302 may have one or more inputs (e.g., labelled X1, X2, X3, X4, X5 and X6 in Figure 3) for receiving one or more of the following signals: signal *paddr* (e.g., an APB address bus from master to slave, which can be up to 32 bits wide); signal *pwrite* (which indicates an APB write access when asserted or high, and an APB read access when de-asserted or low); signal *psel* (which indicates that the slave is selected and that a data transfer is required); signal *penable* (which indicates the second and subsequent cycles of an APB transfer); signal *pwdata* (e.g., driven by the APB master device during write cycles when signal *pwrite* is high, and including the write data, which can be 8, 16, or 32 bits wide); and signal *pready* (e.g., used to extend an APB transfer by the slave device). The interface 302 may have an output (e.g., labelled Y in Figure 3) for producing a reset initiator signal *sw_rst1_wr* based on one or more of the input signals (e.g., after decoding the input signals). The signal *sw_rst1_wr* is passed, optionally via a combinational circuit 304, to an APB software-reset register 306 to write a value of a dedicated reset bit of the register 306. In particular, as exemplified in Figure 3, signal *sw_rst1_wr* may be received at the data input terminal D of a software-reset flip-flop 308. The flip-flop 308 is clocked, for instance, by a first clock signal *clk1* received at its clock terminal. The flip-flop 308 is reset, for instance, by a first reset signal *rst1_n* (e.g., active-low), produced as described in the following, received at its reset terminal R. The data output terminal Q of the flip-flop 308 produces an output signal that is passed to a delay block 310, which in turn produces a reset source signal *sw_rstl.* An AND logic gate 312 receives the complement of the reset source signal *sw_rst1* at a first input terminal, and receives a second reset signal *rst2_n* (e.g., active-low) at a second input terminal, to produce an asynchronous reset signal *as_rst* (e.g., active-low). The second reset signal *rst2_n* may be a main Power On Reset (POR) of the system that includes the digital circuit 30, or may be produced by synchronizing, at a reset synchronizer (whose internal architecture may be known per se), an asynchronous reset of the whole digital circuit 30. It will be noted that the source reset signal *sw_rst1* may be complemented before being passed to the AND logic gate 312 since the reset initiator signal *sw_rst1_wr* might have a complementary assertion logic with respect to the assertion logic of the reset signals that are active-low (e.g., the reset initiator signal *sw_rst1_wr* may be asserted to a high logic value to indicate that a reset has to be carried out, and de-asserted to a low logic value otherwise). The asynchronous reset signal *as_rst* is passed to the reset terminal R of a reset synchronizer circuit 314 (whose internal architecture may be known per se). The reset synchronizer circuit 314 receives a system clock signal *sys_clk* at its clock terminal, and receives a steady logic value (e.g., permanently high or '1') at its data input terminal D (e.g., via a connection to a supply voltage). Therefore, the data output terminal Q of the reset synchronizer circuit 314 produces the first reset signal *rst1_n,* whose assertion edges (e.g., high-to-low edges) are synchronous with the system clock signal *sys_clk.* In other words, reset release of signal *rst1_n* (at the output of the reset synchronizer 314) is synchronous with the clock signal *sys_clk* of the synchronizer itself. Alternatively, an inverted clock signal (e.g., the complement of the system clock signal *sys_clk)* can be used for the synchronizer circuit 314, and in that case the reset release of signal *rst1_n is* synchronous with the falling edge of the system clock signal *sys_clk.*

As exemplified in Figure 3, the digital circuit 30 may include one or more first flip-flops 316 that are clocked by the first clock signal *clkl* and are reset by the first reset signal *rst1_n,* as well as one or more second flip-flops 318 that are clocked by a second clock signal *clk2* and are reset by the second reset signal *rst2_n.* The data output terminal Q1 of at least one of the first flip-flops 316 is coupled to the data input terminal D2 of at least one of the second flip-flops 318 (optionally via a combinational circuit 320) to form a data processing chain. The second clock signal *clk2* may be the same as the first clock signal *clkl,* or may be different.

Therefore, substantially, the interface 302, the register 306 and the first flip-flop(s) 316 are implemented in a first reset domain 31 of the digital circuit 30, while the second flip-flop(s) 318 are implemented in a second reset domain 32 of the digital circuit 30, whose boundaries are exemplified by dash-and-dot lines in Figure 3. The first domain 31 (whose components are reset by the first reset signal *rst1_n*) is called the "source reset domain" and involves, in addition to the second reset signal *rst2_n,* a SW reset source (that is, signal *sw_rst1* that can be generated in response to an APB writing by firmware on a dedicated bit of register 306). Therefore, the first reset domain 31 is reset based on reset triggers coming from any of signals *rst2_n* and *sw_rst1.* The second domain 32 (whose components are reset by the second reset signal *rst2_n*) is called the "destination reset domain" and does not involve the software-triggered reset source *sw_rst1.* Therefore, the second reset domain 32 is reset based on reset triggers coming (only) from signal *rat2_n.* So, the second domain 32 can be considered to be a subset of the first domain 31, from the standpoint of the possible reset sources. The two domains 31 and 32 are connected to each other by at least one data path (e.g., from terminal Q1 of flip-flop 316 to terminal D2 of flip-flop 318) so that, when signal *sw_rst1* is asserted and signal *rst2_n* is not asserted, the flip-flop(s) 318 of the second reset domain 32 can be violated in hold/setup, insofar as the data input D2 can toggle close to an edge of the second clock signal *clk2,* which is an undesirable event.

A possible solution to the issue of hold/setup timing violations presented above may involve the gating of the clock signal of the flip-flops 318 in the destination domain 32. In fact, if the destination flip-flops 318 are not receiving the clock signal *clk2* when the source is reset, hold/setup timing issues can be prevented. In some cases, the gating of the clock signal (also referred to as clock gating) can be carried out via the firmware of the digital circuit 30, by writing a dedicated register of the clock/reset control unit. In particular, in a first step the clock signal *clk2* of the destination reset domain 32 is gated (e.g., disabled) by writing via firmware a dedicated register of the clock/reset control unit. In a second step, the SW reset of the source reset domain 31 is carried out by writing via firmware a dedicated register (e.g., register 306) of the clock/reset control unit. In a third step, the clock signal *clk2* of the destination reset domain 32 is re-enabled by writing again (e.g., overwriting) via firmware the corresponding dedicated register of the clock/reset control unit.

However, gating the clock signal *clk2* of the flip-flop(s) 318 in the destination domain 32 via firmware may sometimes be inapplicable because, for example, the gating of the clock signal *clk2* of the destination reset domain 32 in the first step could prevent further firmware execution (e.g., because the processor in charge of executing the firmware is implemented in the destination reset domain 32 itself). Additionally, clock gating by firmware implies additional configuration steps for the firmware, hence, it increases the program memory and downgrades the performance of the system.

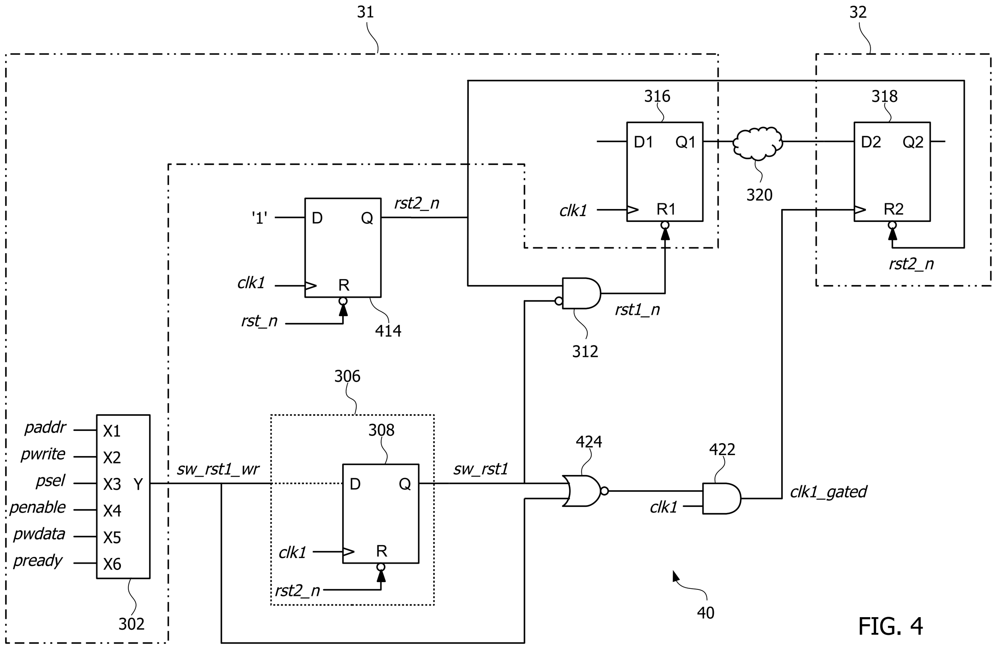

Solutions other than gating the clock signal of the destination domain via firmware are thus desirable. One or more embodiments thus relate to a digital circuit 40 having a reset architecture as exemplified in the circuit diagram of Figure 4, where parts or elements similar to those previously described are indicated with the same or similar reference numbers, and are not described in detail again.

Differently from the circuit of Figure 3, in the circuit of Figure 4 the software-reset register 306 is implemented in the destination reset domain 32 rather than in the source reset domain 31: therefore, the flip-flop 308 is reset by the second reset signal *rst2_n* (e.g., active-low), received at its reset terminal R. Additionally, the flip-flop 308 may be clocked by the first clock signal *clkl,* received at its clock terminal. The output signal *sw_rst1* from the register 306 does not need to be passed to a delay circuit or to a reset synchronizer circuit as in the architecture of Figure 3 before being passed towards the flip-flop(s) 316 of the first reset domain 31, insofar as it is generated by a register 306 pertaining to the same clock domain as the flip-flop(s) 316. Therefore, the complement of the reset source signal *sw_rst1* from the data output terminal Q of flip-flop 308 may be directly passed to a first input terminal of the AND logic gate 312, which receives the second reset signal *rst2_n* (e.g., active-low) at a second input terminal, to produce the first reset signal *rst1_n* (e.g., active-low). The second reset signal *rst2_n* may be produced by a further reset synchronizer circuit 414. In particular, the reset synchronizer circuit 414 receives the first clock signal *clkl* at its clock terminal, receives a steady logic value (e.g., permanently high or '1') at its data input terminal D (e.g., via a connection to a supply voltage), and receives a further asynchronous reset signal *rst_n* (e.g., active-low) at its reset terminal R. The second reset signal *rst2_n* may be a main Power On Reset (POR) of the system that includes the digital circuit 40, or may be produced by synchronizing, at the reset synchronizer 414 (whose internal architecture may be known per se), the asynchronous reset signal *rst_n* of the whole digital circuit 40. Therefore, the data output terminal Q of the reset synchronizer circuit 414 produces the second reset signal *rst2_n,* whose assertion edges (e.g., high-to-low edges) are synchronous with the first clock signal *clkl.* Similarly to the circuit of Figure 3, the digital circuit 40 of Figure 4 may include one or more first flip-flops 316 that are clocked by the first clock signal *clk1* and are reset by the first reset signal *rst1_n,* as well as one or more second flip-flops 318 that are reset by the second reset signal *rst2_n.*

However, differently from the architecture of Figure 3, the second flip-flop(s) 318 in the architecture of Figure 4 are clocked by a gated clock signal *clk1_gated* that is produced based on the first clock signal *clkl.* Substantially, the gated clock signal *clk1* gated is a replica of the first clock signal *clkl,* but is disabled (e.g., steadily low) in response to a software-triggered reset of the first reset domain 31 being demanded. For instance, the gated clock signal *clk1* gated may be disabled in response to the reset initiator signal *sw_rst1_wr* being asserted (e.g., high), or the reset source signal *sw_rstl* being asserted (e.g., high), or both signals *sw_rst1_wr* and *sw_rst1* being asserted (in other words, in response to any of signals *sw_rst1_wr* and *sw_rst1* being asserted). By doing so, the gated clock signal clkl*_gated* may be safely disabled before the reset signal *rst1_n* toggling to an active (e.g., low) level and as long as the reset signal *rst1_n* remains active (e.g., low). This time window can even be prolonged, if necessary, by delaying the release moment of the clock gate (e.g., adding more flip-flops 308, connected in a chain, inside module 306).

In particular, in the example of Figure 4, the gated clock signal *clk1* gated may be produced at the output of a clock gating cell 422 (e.g., including a latch and an AND logic gate in a manner known per se, and operating from the logic standpoint as an AND logic gate). The clock gating cell 422 may have a first input (e.g., clock input) configured to receive the first clock signal *clkl,* and a second input (e.g., enable input) configured to receive the output signal from a NOR logic gate 424. The NOR logic gate 424 may have a first input configured to receive the reset initiator signal *sw_rstl wr,* and a second input configured to receive the reset source signal *sw_rstl,* so that the output of the NOR logic gate 424 is de-asserted (e.g., low) in response to any of signals *sw_rst1_wr* and *sw_rst1* being asserted (e.g., high).

Advantageously, in the architecture of Figure 4, all signal propagation arcs (e.g., paths) can be checked by a STA tool during design of the circuit, e.g., including the arcs in the SW reset path (e.g., from the output of register 306 through the NOR logic gate 424 to the clock gating cell 422, as well as from the output of register 306 through the AND logic gate 312, the flip-flop(s) 316 and to the flip-flop(s) 318).

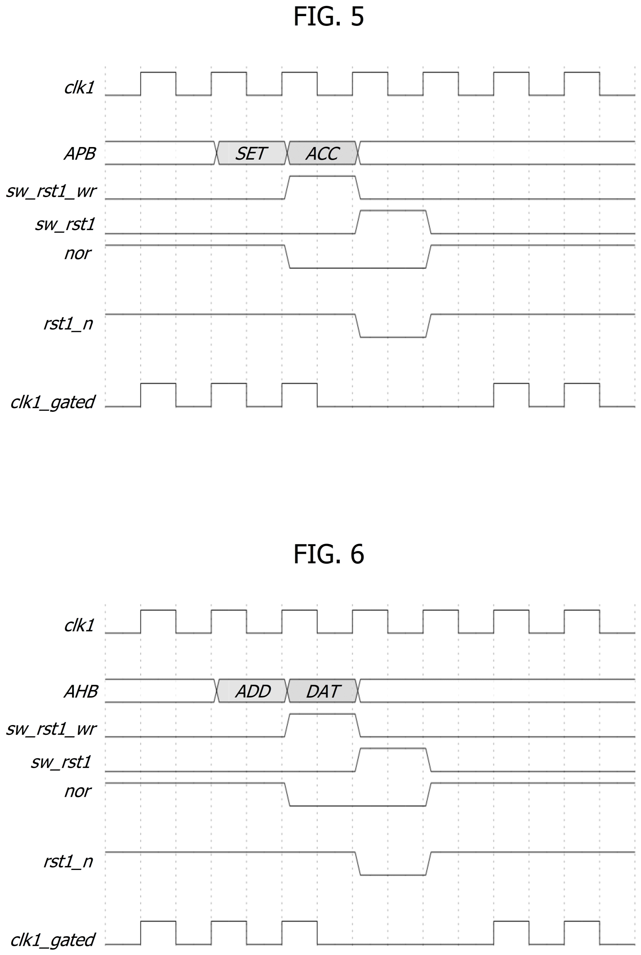

Figure 5 is a time diagram including waveforms of signals in the circuit 40 of Figure 4, where the firmware-triggered reset is received via APB, in particular: the first clock signal *clkl,* a signal *APB* indicative of the current phase of an APB transaction, the reset initiator signal *sw_rst1_wr,* the source reset signal *sw_rstl,* a signal *nor* at the output of the NOR logic gate 424, the first reset signal *rst1_n,* and the gated clock signal *clk1_gated.* It can be noted that the FW-triggered reset generates a pulse in signal *sw_rst1 wr* during an access phase *ACC* of the APB transaction (which follows a setup phase *SET),* and this pulse of signal *sw_rst1 wr* is combined by the NOR logic gate with the output signal *sw_rst1* of the register 306 to produce the gating signal nor that is used by the clock gating cell 422 to gate the clock signal of the destination reset domain 32 (signal *clk1* gated is disabled at both assertion and release of the reset).

Figure 6 is a time diagram including waveforms of signals in the circuit 40 of Figure 4, where the firmware-triggered reset is received via AHB, in particular: the first clock signal *clkl,* a signal AHB indicative of the current phase of an AHB transaction, the reset initiator signal *sw_rst1_wr,* the source reset signal *sw_rstl,* the signal *nor* at the output of the NOR logic gate 424, the first reset signal *rst1_n,* and the gated clock signal *clk1_gated.* It can be noted that the FW-triggered reset generates a pulse in signal *sw_rst1* wr during a data phase *DAT* of the AHB transaction (which follows an address phase *ADD),* and this pulse of signal *sw_rst1_wr* is used in a way similar to that described with reference to Figure 5.

Therefore, one or more embodiments as described herein present a simple and robust architecture to address reset setup/hold timing issues in digital circuits that include multiple reset domains. In particular, one or more embodiments may provide one or more of the following advantages:
- an architecture that is independent from PVT-variant delay cell;
- the possibility of checking all the signal paths by an STA tool, thus avoiding RDC or timing issues in the design;
- a hardware-based robust architecture to gate the clock signal of the destination reset domain; clock gating at reset assertion and reset release avoids timing issues related to reset, and the hardware implementation takes away from the firmware the step of configuring and disabling the clock;
- a clean and optimized implementation (e.g., including a single NOR logic gate and a single clock gating cell), which results in low area and low power consumption;
- an easy-to-integrate solution; and
- a solution that is extendable to the AHB bus interface (with decoding carried out during the data phase of the bus transaction), or any other system bus (e.g., OCP1.0, OCP2.0, and the like).

Without prejudice to the underlying principles, the details and embodiments may vary, even significantly, with respect to what has been described by way of example only, without departing from the extent of protection.

The extent of protection is determined by the annexed claims.

## Claims

1. A digital circuit (40), comprising:
a communication bus interface (302) configured to receive and decode one or more bus signals (*paddr, pwrite, psel, penable, pwdata, pready)* and to produce a reset initiator signal (*sw_rst1_wr*) based thereon, the reset initiator signal (*sw_rst1_wr*) being asserted to indicate that a reset is demanded;
at least one first flip-flop (316) configured to be clocked by a first clock signal *(clkl)* and be reset by a first reset signal *(rstl_n*);
at least one second flip-flop (318) configured to be clocked by a second clock signal (*clk1_*gated) and be reset by a second reset signal (*rst2_n*), the at least one second flip-flop (318) being configured to receive (Q1, 320, D2) a data signal from the at least one first flip-flop (316);
a reset register (306) configured to be reset by the second reset signal (*rst2_*n), and configured to receive the reset initiator signal (*sw_rst1_wr*) and to produce a reset source signal (*sw_rstl)* based thereon;
a first logic gate (312) configured to receive the second reset signal (*rst2_*n) and the complement of the reset source signal (*sw_rst1*), and configured to assert the first reset signal (*rst1_n*) in response to the second reset signal (*rst2_n)* being asserted and/or the reset source signal (*sw_rstl)* being asserted;
a gating circuit (422, 424) configured to receive the reset initiator signal (*sw_rst1_wr*), the reset source signal (*sw_rstl)* and the first clock signal (*clk1*), and configured to produce the second clock signal (*clk1_*gated) at an output of the gating circuit (422, 424) by:
passing the first clock signal *(clkl)* to the output of the gating circuit (422, 424) in response to the reset initiator signal (*sw_rst1_wr*) and the reset source signal (*sw_rstl)* being de-asserted; and
disabling the output of the gating circuit (422, 424) in response to any of the reset initiator signal (*sw_rst1_wr*) and the reset source signal (*sw_rstl)* being asserted.

2. The digital circuit (40) of claim 1, wherein the reset register (306) is configured to be clocked by the first clock signal *(clkl).*

3. The digital circuit (40) of any of the previous claims, wherein the gating circuit (422, 424) comprises:
a NOR logic gate (424) configured to receive the reset initiator signal (*sw_rst1 wr)* and the reset source signal (*sw_rst1*), and to produce an intermediate output signal based thereon; and
a clock gating cell (422) configured to receive the intermediate output signal and the first clock signal *(clkl),* and to produce the second clock signal (*clk1_gated*) based thereon.

4. The digital circuit (40) of any of the previous claims, comprising a reset synchronizer circuit (414) configured to be clocked by the first clock signal *(clkl)* and be reset by an asynchronous reset signal (*rst_n*) to produce the second reset signal (*rst2_n*).

5. The digital circuit (40) of any of the previous claims, wherein the reset register (306) comprises a register flip-flop (308) configured to receive the first clock signal *(clkl)* at a respective clock terminal, receive the second reset signal (*rst2_n*) at a respective reset terminal, receive the reset initiator signal (*sw_rst1_wr*) at a respective data input terminal, and produce the reset source signal (*sw_rstl)* at a respective data output terminal.

6. The digital circuit (40) of any of the previous claims, wherein the communication bus interface (302) comprises a slave interface configured to receive and decode signals encoded according to an Advanced Microcontroller Bus Architecture, AMBA, protocol, preferably an Advanced Peripheral Bus, APB, protocol or an Advanced High-performance Bus, AHB, protocol.

7. The digital circuit (40) of claim 6, wherein the communication bus interface (302) is configured to assert the reset initiator signal (*sw_rst1_wr*) during an access phase *(ACC)* of an APB transaction.

8. The digital circuit (40) of claim 6, wherein the communication bus interface (302) is configured to assert the reset initiator signal (*sw_rst1_wr*) during a data phase *(DAT)* of an AHB transaction.

9. A method of operating a digital circuit (40) according to any of the previous claims, the method comprising:
receiving and decoding the one or more bus signals *(paddr, pwrite, psel, penable, pwdata, pready)* at the communication bus interface (302), and producing the reset initiator signal (*sw_rst1_wr*) based thereon, asserting the reset initiator signal *(sw_rst1_wr) to* indicate that a reset is demanded;
receiving the reset initiator signal (*sw_rst1_wr)* at the reset register (306), and producing the reset source signal *(sw_rst1*) based thereon;
receiving the second reset signal *(rst2_n)* and the complement of the reset source signal (*sw_rstl)* at the first logic gate (312), and asserting the first reset signal (*rst1_n*) in response to the second reset signal (*rst2_n)* being asserted and/or the reset source signal (*sw_*rstl) being asserted;
receiving the reset initiator signal (*sw_rstl wr),* the reset source signal (*sw_rstl)* and the first clock signal *(clkl)* at the gating circuit (422, 424), and producing the second clock signal (*clk1_gated*) at an output of the gating circuit (422, 424) by:
passing the first clock signal *(clkl)* to the output of the gating circuit (422, 424) in response to the reset initiator signal (*sw_rst1_wr*) and the reset source signal (*sw_rstl)* being de-asserted; and
disabling the output of the gating circuit (422, 424) in response to any of the reset initiator signal (*sw_rst1_wr)* and the reset source signal (*sw_rstl)* being asserted.
